# EUROPEAN PATENT SPECIFICATION

(11) **EP 1 312 540 B1**
(45) Date of publication and mention of the grant of the patent: **02.07.2008**
(21) Application number: 02024146.9
(22) Date of filing: 30.10.2002
(51) Int. Cl.: B62J 11/00

(54) **Bottle-cage device for bicycles**
Trinkflaschenhalter für Fahrräder
Dispositif de support pour bouteille de bicyclette

(30) Priority: 16.11.2001 IT TO20011078; 16.11.2001 IT TO20010214 U
(43) Date of publication of application: 21.05.2003
(73) Proprietor: Campagnolo S.r.l., 36100 Vicenza (VI) (IT)
(72) Inventor: Meggiolan, Mario, 36051 Creazzo (Vicenza) (IT)
(74) Representative: Checcacci, Giorgio

(56) References cited:
- FR-A- 2 615 158
- FR-A- 2 647 411
- US-A- 5 040 709
- US-A- 5 170 981
- US-A- 5 607 087

## Description

The present invention relates to a supporting device for an auxiliary article, particularly a bottle-cage device, for bicycles.

Devices of the above mentioned type are commonly used for supporting a bottle or similar container.

In most known solution the device comprises a main body, fixed to the bicycle frame, to which there is associated a supporting part, constituted by a metal wire frame defining a housing for the bottle. When the bottle is introduced into its housing, a slight widening of the frame takes place, so that the bottle is held within the housing by the elastic reaction of the metal wire. A solution of the above mentioned type is disclosed for example in US-A-5,392,971.

In known devices of the above mentioned type, the supporting part made of metal wire has a poor structural strength. Under this point of view, for example, the improper introduction of the bottle into the above mentioned frame may give rise to permanent deformations of the latter.

In other known solutions, in lieu of the metal wire frame, to the main body of the device there is rigidly associated an annular element, within which a bottle can be inserted. To the lower end of the main body there is associated a supporting base for the bottle, whereas at the upper end of the same body a locking element is present which can be activated manually.

In use, the bottle is inserted into the annular element from above, along a direction substantially parallel to the longitudinal axis of the main body, until the lower portion of the bottle comes into abutment against the lower base.

The locking element is then manually brought to a position in which it locks the bottle within the device. Withdrawal of the bottle from the device can be obtained through an inverted sequence of operations with respect to those indicated above. A solution of this type is disclosed for example in US-A-5, 170, 981.

The above indicated known device, although having a structure of greater strength with respect to the previous solution, is relatively inconvenient in use, especially while riding the bicycle, since it requires a specific manual operation by the cyclist on the locking element, in order to lock and/or unlock the bottle relative to the device.

Furthermore, the devices according to the previously mentioned prior art are formed by a number of separate parts, which complicates the assembling of the device and the mounting thereof on the bicycle frame.

FR-A-2615158 which constitutes the closest prior art discloses a bottle holder for a bicycle having an anchoring portion and a holding portion connected together; the holding portion is made of two elastic arms that hold the bottle.

Similarly, US-A-5607087 discloses a fluid dispensing device including a support cage for holding a bottle, this cage comprising an anchoring portion and a holding portion; the holding portion is made of two arms that elastically hold the bottle.

The present invention intends to solve one or more of the previously mentioned drawbacks, and particularly to provide an accessory supporting device for bicycles, particularly a bottle cage device, which is simple to manufacture and assemble, easy to use and reliable in operation along the time.

These objects are achieved according to the present invention by an accessory supporting device for bicycles according to claim 1, preferred features are addressed by dependent claims.

Furthermore, in some devices of known type, the means provided for housing and holding the bottle in position comprises at least one annular thin wall or strip, defining an axial space in which the bottle can be inserted and held in position by means of suitable stop means. A solution of this type is for example disclosed in US-R-5.170,981. In other known solutions, see e.g. above cited FR-A-2615158, instead of the annular strip, there is provided a pair of thin curved opposite blades which elastically hold the bottle in a jaw-like manner.

In some circumstances, and typically during the movement of introduction or withdrawal of the bottle with respect to its,housing, the hand of the cyclist may come in contact with the edges of the above mentioned walls or blades which, as indicated, are of reduced thickness. Therefore, these edges may be sharp, above all when the respective portions of the bottle-cage are made of metal material or carbon fibre, so as to cause injures to the hand or also other parts of the body of the cyclist, for example in the case of an accidental fall.

In order to eliminate these drawbacks, there is known to provide the above mentioned edges with a suitable protective cover, made of plastic material which however involves some operations and additional pieces in order to produce the bottle-cage, with a result increase in the production and marketing costs.

Another aim of the present invention is that of solving the above mentioned drawback and in particular of providing a bottle-cage device which is safe and easy to use, as well as simple to manufacture and assemble, and reliable in operation with the time.

This and also further objects are achieved according to the invention by an accessory supporting device for bicycles, particularly a bottle-cage device, defining a seat for housing an accessory, particularly a bottle, the device comprising
- an anchoring portion, which is to be fixed to the frame of a bicycle, and
- a holding portion, connected to said anchoring portion and defining a through axial aperture, provided for receiving the body of the accessory therethrough,
characterised in that said holding portion presents a relatively thin thickness and a first edge shaped so as to have a cross section with a profile having a curved end, said holding portion having a relatively thin thickness also along said first edge.

Further objects, features and advantages of the present invention will become apparent from the detailed description which follows and the annexed drawings, given purely by way of illustrating and non limiting example, in which:
- figure 1 is a perspective view of an accessory supporting device for bicycles made according the teachings of the present invention,
- figure 2 is a side view of the device of figure 1, mounted on a bicycle, with a respective bottle in the insertion stage into the device itself;
- figure 3 is a front view of the device and the bottle of figure 2,
- figure 4 is a cross-section taken along line IV-IV of figure 3,
- figure 5 is a side view similar to that of figure 2, but with the bottle inserted into the device according to the invention,
- figure 6 is a front view of a supporting device for a bicycle auxiliary article made according to a possible variant of the invention, mounted on a bicycle,
- figure 7 is a side view of the device of figure 6, with the associated bottle inserted therein, and
- figure 8 is a cross-section taken along line VIII-VIII of figure 7
- figure 9 is a perspective view of a bottle-cage device for bicycles made according to the present invention,
- figure 10 is a cross-section taken along line II-II of figure 9.

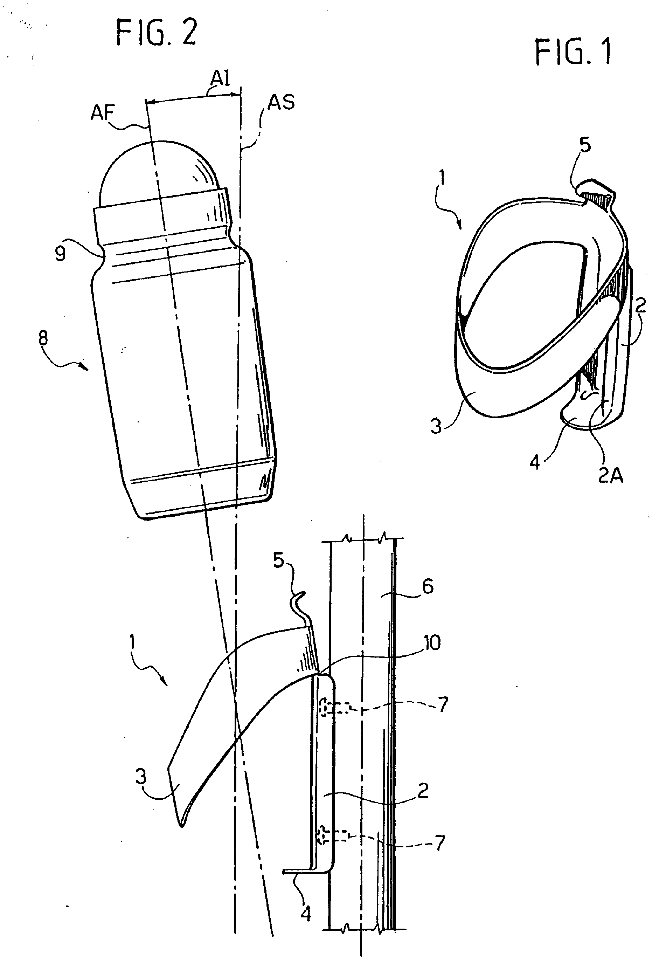

In figure 1, reference numeral 1 generally designates an accessory supporting device for bicycles made according to the teachings of the present invention.

The body of the device 1, preferably formed in one piece, such as of carbon fibre, comprises an anchoring portion 2, which is to be associated to the frame of a bicycle.

Substantially at the upper end of the anchoring portion 2 a supporting or holding portion is provided, defining an axial passage. In the example shown, the supporting portion is in form of an annular strip, designated by 3, having a relatively reduced thickness, for instance of about 1.5 millimetres.

From the lower end of the anchoring portion 2 there extends orthogonally a supporting appendage, designated by 4.

Reference number 5 designates a tab with a curved end, which extends upwardly from the upper edge of strip 3, substantially at the area thereof in which it is connected to the anchoring portion 2.

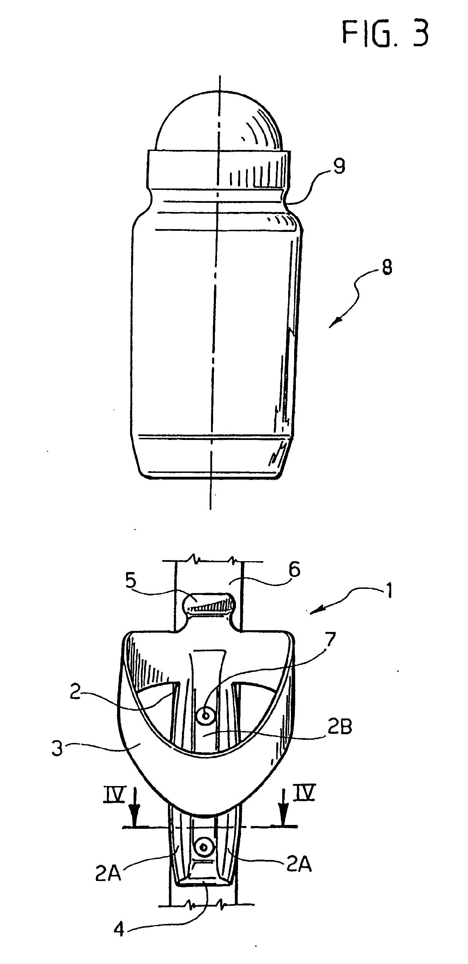

In figures 2 and 3, the device 1 according to the invention is mounted on a generic tube 6 forming part of the bicycle frame.

To this end, in the anchoring portion 2 there are provided through holes, through which fixing screws can be inserted, designated by 7, which are to be screwed into tube 6.

Also in figures 2 and 3, reference number 8 generally designates a bottle which is to be supported by the device 1. Along the periphery of bottle 8, at the upper portion thereof, a continuous groove 9 is formed which is for co-operation with the curved end of the flexible tab 5 which extends upwardly from the annular strip 3.

Reference AF designates the axis of the annular strip 3, that is the axis of the axial passage thereof. With AS an axis is further designated, which is parallel to the longitudinal axis of the anchoring portion 2. Axis AS also represents the axis on which the bottle 8 is housed, when it is introduced down to the bottom of device 1.

According to an important aspect of the present invention, the connecting portion 10 between the anchoring portion 2 and the annular strip 3 is elastically deformable or flexible. In this manner, as it will become clearly apparent in the following, the annular strip 3 is able to assume two different angular positions, depending upon whether the bottle 8 is present or not within the device 1, the axis AF having a different inclination in these two positions. Thus, when the bottle 8 is inserted down to the bottom of the device, the connecting portion 10 is urged in such a way that it holds a portion of the inner surface of strip 3 elastically pressed against a portion of the surface of bottle 8.

In the embodiment of the invention shown in figures 1 - 5, when the bottle 8 is not inserted into the device 1, the axis AF has a given inclination or incidence angle AI with respect to axis AS.

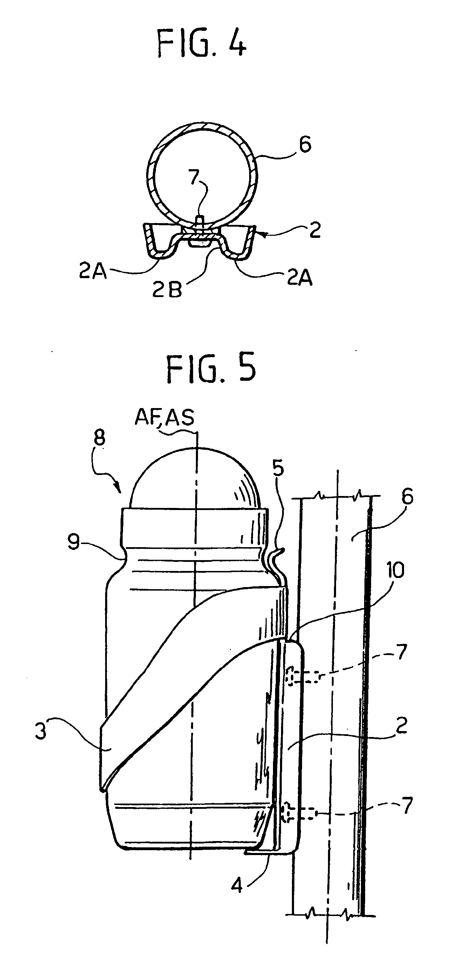

As it can be noted in figures 3 and 4, the anchoring portion 2 has two side projections, designated by 2A on its surface opposite to that in contact with tube 6. These projections 2A extend longitudinally along portion 2 through most part of the length thereof, defining a cavity 2B.

As it will become apparent in the following, the projections 2A have the function to provide two separate supporting surfaces for the bottle 8, in order to prevent lateral movements thereof when it is inserted within the device 1 and also in order to guide the bottle 8 in its movements when it is inserted into or withdrawn from the device 1, due to the presence of cavity 2B.

The operation of device 1, in the embodiment of the invention shown in figures 1 - 5 is the following.

The bottle 8 is introduced from above into the annular strip 3. As it can be noted in figure 2, the direction of this introduction of the bottle 8 within the strip 3 (which direction corresponds substantially to axis AF) forms a given incidence angle AI with respect to axis AS.

This means that, during introduction, the lower portion of the bottle 8 comes first in contact with projections 2A of the anchoring portion 2. The cavity 2B is thus able to provide a sort of guidance for the further sliding downward movement of the bottle 8. During the introduction, also, the bottle 8 comes in contact with tab 5, causing an elastic deflection thereof towards the tube 6.

Given the above mentioned incidence angle AI, during the progressive lowering of the bottle 8, the latter comes in contact both with the projections 2A and with the surface of the axial passage of strip 3. This causes an increasing urging force being applied to the body of device 1 at the connecting portion 10 between this annular strip 3 and the anchoring portion 2.

The above mentioned urging force causes the portion 10 to undergo an elastic deflection, which enables a movement of the annular strip 3. This movement is such that the axis AF becomes coincident with axis AS, when the lower end of the bottle 8 comes into abutment against the lower support 4. When this position is reached, also, the groove 9 of bottle 8 comes to the curved end of the tab 5, so that the tab can elastically engage the groove.

This operative condition is shown in figure 5.

As it is understandable, in the condition of figure 5, the annular strip 3 is held by the body of bottle 8 in a condition of elastic tension, which enables the bottle to be held within the device 1. A further holding function of the bottle in position is provided by the action of tab 5.

In this situation, the bottle 8 is not subjected to vibrations during movement of the bicycle, also because the side surface of the bottle is in abutment against two separate surfaces of the anchoring portion 2, represented by projections 2A. Since a longitudinal portion of the rounded surface of the bottle 8 is positioned within the cavity 2B, possible side movements of the bottle 8 are also prevented.

The bottle can be withdrawn by a simple upward drawing action on the bottle, which causes the return of device 1 to the condition of figure 2.

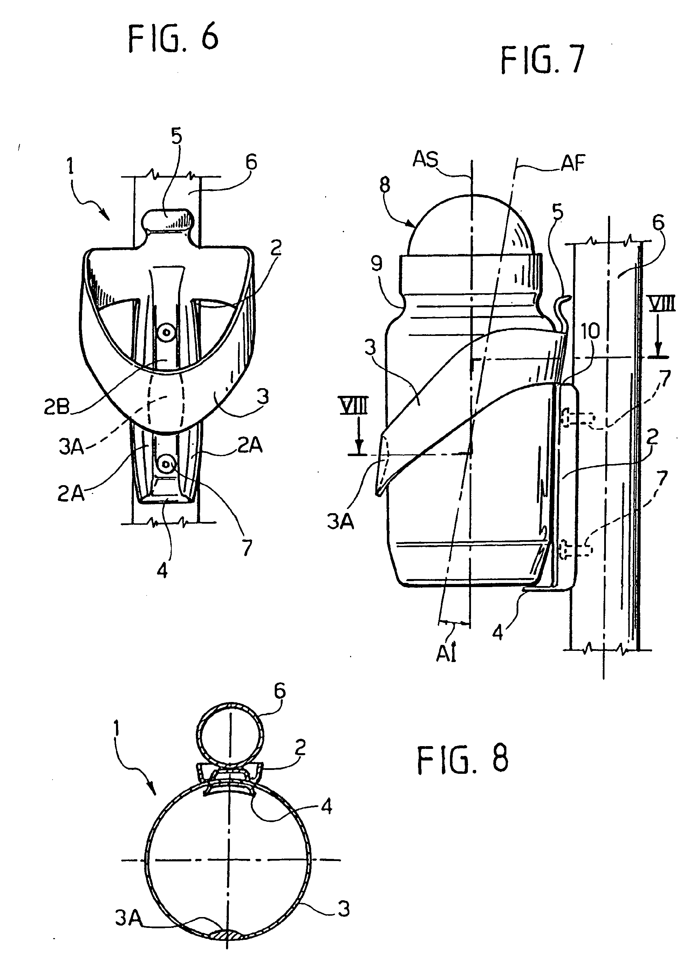

In figures 6, 7 and 8 a possible alternative in embodiment of the invention is shown, according to which the annular strip 3 has a deformed portion or projection 3A, substantially diametrically opposite to the connecting portion 10. Moreover, in this embodiment, the relative position between strip 3 and portion 2 is such that, when the bottle 8 is not introduced within the device 1, axes AF and AS as identified above, are coincident with each other.

In the case of the embodiment of figures 6 - 8, the bottle 8 is introduced into annular strip 3 along a direction substantially parallel to portion 2.

During insertion, a portion of the outer surface of the bottle 8 comes in contact with the projection 3A, whereupon it slides thereon. Thereafter, also during insertion, the lower portion of the bottle 8 comes in contact with the anchoring portion 2, and slides thereon.

Also in this case, the progressive sliding downward movement of the bottle 8, in contact with projection 3A and projections 2A, causes an increasing urging action at the connecting portion 10, thus determining a movement of the annular strip 3 with respect to the anchoring portion 2.

Therefore, also in this case, when the lower end of the bottle 8 reaches the lower support 4, the annular strip 3 is held in a condition of elastic tension, so that the bottle is held in position and vibrations and lateral movements thereof are prevented, as already described with reference to embodiment of figures 1 - 5. In this position, as shown in figure 6, axes AF and AS are inclined relative to each other.

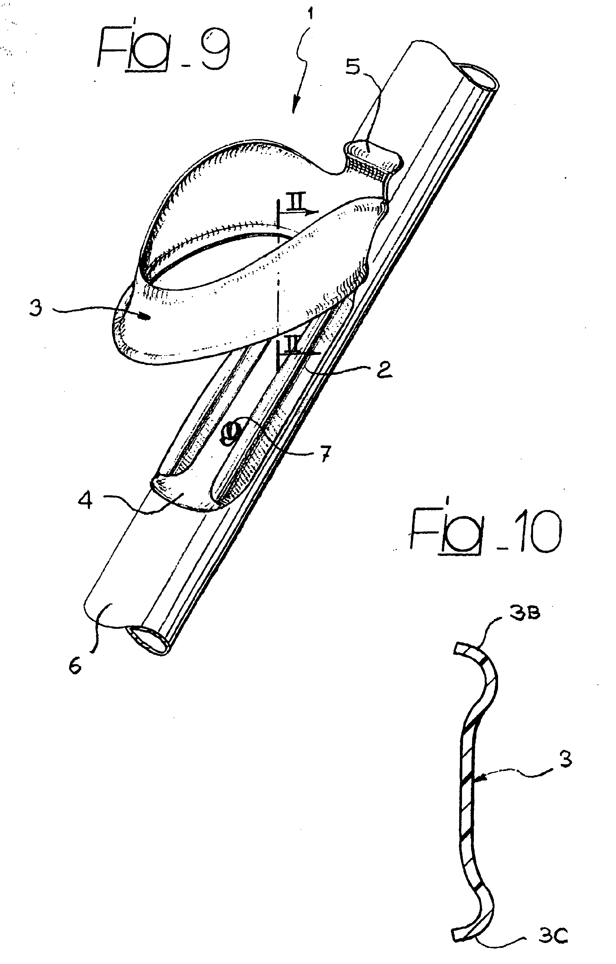

According to a further inventive aspect shown with reference to figures 9 and 10, in which the same reference numerals previously mentioned are used, the annular strip 3 may have a relatively constant thickness, also at its upper and lower edges, designated by 3B and 3C respectively.

Figure 10 particularly shows how the strip 3 is shaped along its two edges 3B and 3C so as to have in cross section a profile with ends curved towards the inside of the housing for the bottle, i.e. towards the inside of the axial space defined by the annular strip 3. Alternatively, the edge 3B and/or 3C may be curved outwardly, for instance by an angle greater than 270°, to avoid cutting projections.

This arrangement dramatically reduces the risk of injures to the cyclist hands, as mentioned in the introductory part of the present description, for example during the operations for introducing or withdrawing the bottle with respect to the device 1, or injures also to other parts of the body in the case of accidental falls. This is obtained with no need to apply suitable protective elements on the edges of the strip 3, as well as no need of carrying out additional operations on this strip. The curvature of the edges 3B and 3C can be obtained indeed with an operation which is extremely simple per se, while device 1 is formed.

It is to be noted that the advantages of the invention can be obtained also in case the holding means of the bottle are formed differently from a single annular strip or wall, in particular in case they are of jaw-like type, i.e. comprising a pair of opposite curved blade elements.

The foregoing description clarifies the features of the accessory supporting device for bicycles made according to the teachings of the present invention, which features are further indicated in detail in the annexed claims.

The foregoing description also clarifies the advantages of the invention, mainly lying in the simplicity of manufacture and use of device 1, in the strength of its structure, in its reliability along the time and in its safety in use.

Clearly, a number of variants are possible for the skilled man in the art with regard to the device described herein as an example, without departing from the novel concepts which are at the basis of the invention.

For example, the upper edge of the annular strip 3 can advantageously be made with a flared shape in order to make the insertion of the bottle 8 easier.

The supporting portion 4 integrated into the anchoring portion 2 could be also eliminated, since its function could for example be accomplished by a part of the bicycle frame located below the fixing spot for the device 1.

The device 1 according to the invention is applicable also for supporting containers or articles different from a bottle. Under this point of view, it is clear therefore that the cross-section of strip 3, that is, the cross-section of the axial passage thereof, if necessary could have a shape different from an annular shape, depending upon the type of article which is to be supported.

Also the lower supporting appendage 4 may have a curved edge, similar to what has been described and shown above with reference to the annular strip 3.

## Claims

1. An accessory supporting device for bicycles, particularly a bottle-cage device, defining a seat for housing an accessory (8), particularly a bottle, the device (1) comprising
- an anchoring portion (2), which is to be fixed to the frame (6) of a bicycle, and
- a holding portion (3), substantially of annular shape, connected to said anchoring portion and defining a through axial aperture, provided for receiving the body of the accessory (8) therethrough, said annular holding portion (3) being connected to said anchoring portion (2) at a connection portion (10),
**characterised in that** said substantially annular shaped holding portion (3) is able to elastically pivot about the connecting portion (10) from a first position to a second position as a result of the introduction of the accessory (8) into said seat, in such a way that in said second position said substantially annular shaped holding portion elastically holds the accessory in said seat.

2. Device according to claim 1, **characterized in that** said annular holding portion is in form of a strip (3).

3. Device according to claim 2, **characterized in that** said strip (3) has an' upper part and extends in a cantilever fashion from the said upper part along a generally downwardly inclined plane, so as to define a strip portion diametrically opposite to said upper part and downwardly displaced relative thereto.

4. Device according to claim 3, **characterized in that** said strip (3) is connected to said anchoring portion (2) at said upper part.

5. Device according to claim 1, **characterised in that** said anchoring portion (2) and said holding portion (3) form a body in one piece.

6. Device according to claim 5, **characterised in that** said body in one piece comprises an elastically deformable portion which is close to the location of the connecting portion between the anchoring portion (2) and said holding portion (3).

7. Device according to claim 1, **characterised in that** it comprises a lower supporting portion (4), which is also connected to the anchoring portion and provided for supporting a bottom portion of the body of the accessory (8) .

8. Device according to claim 7, **characterised in that** said anchoring portion (2), said holding portion (3) and said supporting portion (4) form a body in one piece.

9. Device according to claim 1, **characterised in that** to said holding portion (3) there is associated an elastically deformable tab (5) which is for cooperating with said accessory (8) when said holding portion (3) is in said second position.

10. Device according to claim 9, **characterised in that** said anchoring portion (2), said holding portion (3), said supporting portion (4) and said tab (5) form a body in one piece.

11. Device according to claim 1, **characterised in that** guiding and positioning means (2A, 2B) are provided, comprising at least two projections (2A) which extend longitudinally along a prevailing portion of said anchoring portion (2), so as to define a cavity (2B) .

12. Device according to claim 11, **characterised in that** said anchoring portion (2), said holding portion (3), said supporting portion (4), said tab (5) and said projections (2A, 2B) form a body in one piece.

13. Device according to claim 5 or 8 or 10 or 12, **characterised in that** said body in one piece is made of carbon fibre material.

14. Device according to claim 1, **characterised in that**:
- in said first position, the axis (AF) of said through aperture is inclined with respect to the axis (AS) of the anchoring portion (2);
- in said second position, the axis (AF) of said through aperture is substantially parallel to the axis (AS) of the anchoring portion (2).

15. Device according to claim 1, **characterised in that** said holding portion (3) has an inner projection (3A) substantially diametrically opposite to the portion thereof connected to said anchoring portion (2).

16. Device according to claim 15, **characterised in that**
- in said first position, the axis (AF) of said through aperture is substantially parallel to the axis (AS) of the anchoring portion (2);
- in said second position, the axis (AF) of said through aperture is inclined with respect to the axis (AS) of the anchoring portion (2) .

17. Device according to claim 1, **characterised in that** said holding portion (3) has an upper flared edge.

18. Device according to any of claims 1 to 17, wherein said holding portion (3) presents a relatively thin thickness and a first edge (3B) shaped so as to have a cross section with a profile having a curved end, said holding portion (3) having a relatively thin thickness also along said first edge (3B).

19. Device according to claim 18, **characterised in that** said holding portion (3) comprises also a second edge (3C) and is shaped along the latter so as to have a cross section with a profile having a curved end, said holding portion (3) having a relatively thin thickness also along said second edge (3C).

20. Device according to claim 18, **characterised in that** said holding portion (3) has a substantially constant thickness.

21. Device according to claim 18, **characterised in that** said holding portion (3) has a generally annular shape.

22. Device according to claim 18, **characterised by** comprising a curved blade element presenting a pair of curved elements which are opposite to each other in a jaw-like fashion.

23. Device according to claim 18, **characterised by** comprising a lower supporting element (4) which is for supporting the lower part of the accessory (8).

24. Device according to claim 18, **characterised in that** said anchoring portion (2) and said holding means (3, 4) are formed in a single piece body.

25. Device according to claim 24, **characterised in that** said single piece body is made of carbon fibre.

26. Device according to claim 21, **characterised in that** the connecting portion between said holding portion (3) and said anchoring portion (2) is elastically deformable, so that the holding portion (3) is able to elastically pivot with its axis (AF) with respect to the axis (AS) of the anchoring portion, between at least two different positions as a result of the introduction of the bottle in said housing, in one of said positions, said holding portion (3) being elastically urged in such a way to keep the accessory (8) locked in its housing.

## Patentansprüche

1. Zurüstteilhaltevorrichtung für Fahrräder, insbesondere ein Flaschenhalter, der eine Befestigungsfläche zur Aufnahme eines Zurüstteils (8), insbesondere einer Flasche, bildet, wobei die Vorrichtung umfasst:
Eine Verankerung (2), die an den Rahmen (6) eines Fahrrades befestigbar ist, und
Eine Halterung (3), die im Wesentlichen ringförmig ausgebildet und mit der Verankerung verbunden ist, sowie eine axiale Durchgangsöffnung durch diese zur Aufnahme des Körpers des Zurüstteils (8) aufweist, wobei die ringförmige Halterung (3) an einem Verbindungsbereich (10) mit der Verankerung (2) verbunden ist,
**dadurch gekennzeichnet, dass**
die im Wesentlichen ringförmige Halterung (3) aufgrund des Anordnens des Zurüstteils (8) auf der Befestigungsfläche von einer ersten Position in elastischer Weise um den Verbindungsbereich (10) in eine zweite Position schwenkbar ist, so dass die im Wesentlichen ringförmige Halterung das Zurüstteil auf der Befestigungsfläche elastisch in der zweiten Position hält.

2. Vorrichtung nach Anspruch 1, **dadurch gekennzeichnet, dass** die ringförmige Halterung in Form eines Streifens (3) ausgebildet ist.

3. Vorrichtung nach Anspruch 2, **dadurch gekennzeichnet, dass** der Streifen (3) einen oberen Teil aufweist und sich in freitragender Weise aus dem oberen Teil entlang einer im Allgemeinen nach unten geneigten Ebene erstreckt, um einen Streifen zu definieren, der diametral gegenüber des oberen Bereiches und relativ dazu nach unten versetzt angeordnet ist.

4. Vorrichtung nach Anspruch 3, **dadurch gekennzeichnet, dass** der Streifen (3) an dem oberen Teil mit der Verankerung (2) verbunden ist.

5. Vorrichtung nach Anspruch 1, **dadurch gekennzeichnet, dass** die Verankerung (2) und die Halterung (3) einen aus einem Stück geformten Körper bilden.

6. Vorrichtung nach Anspruch 5, **dadurch gekennzeichnet, dass** der aus einem Stück geformte Körper einen elastisch verformbaren Bereich aufweist, der sich in der Nähe des Verbindungsbereiches zwischen der Verankerung (2) und der Halterung (3) befindet.

7. Vorrichtung nach Anspruch 1, **dadurch gekennzeichnet, dass** die Vorrichtung einen unteren Haltebereich (4) umfasst, der ebenfalls mit der Verankerung (2) verbunden und zum Halten eines Bodenbereiches des Körpers des Zurüstteils (8) ausgebildet ist.

8. Vorrichtung nach Anspruch 7, **dadurch gekennzeichnet, dass** die Verankerung (2), die Halterung (3) und der Haltebereich (4) einen aus einem Stück geformten Körper bilden.

9. Vorrichtung nach Anspruch 1, **dadurch gekennzeichnet, dass** an der Halterung (3) eine elastisch verformbare Nase (5) ausgebildet ist, die mit dem Zurüsteil (8) kooperiert, wenn sich die Halterung (3) in der zweiten Position befindet.

10. Vorrichtung nach Anspruch 9, **dadurch gekennzeichnet, dass** die Verankerung (2), die Halterung (3), der Haltebereich (4) und die Nase (5) einen aus einem Stück geformten Körper bilden.

11. Vorrichtung nach Anspruch 1, **dadurch gekennzeichnet, dass** Führungs- und Positionierungsmittel (2A, 2B) bereitgestellt sind, die zumindest zwei Vorsprünge (2A) umfassen, die sich zur Ausbildung eines Hohlraumes in die Längsrichtung entlang eines bestimmten Bereiches der Verankerung (2) erstrecken.

12. Vorrichtung nach Anspruch 11, **dadurch gekennzelchnet, dass** die Verankerung (2), die Halterung (3), der Haltebereich (4), die Nase (5) und die Vorsprünge (2A, 2B) einen aus einem Stück geformten Körper bilden.

13. Vorrichtung nach Anspruch 5 oder 8 oder 10 oder 12, **dadurch gekennzeichnet, dass** der aus einem Stück geformten Körper aus Karbonfasermaterial gebildet ist.

14. Vorrichtung nach Anspruch 1, **dadurch gekennzeichnet, dass**
in der ersten Position die Achse (AF) der Durchgangsöffnung mit Bezug auf die Achse (AS) der Verankerung (2) geneigt ist;
in der zweiten Position die Achse (AF) der Durchgangsöffnung im Wesentlichen parallel zu der Achse (AS) der Verankerung (2) ist.

15. Vorrichtung nach Anspruch 1, **dadurch gekennzeichnet, dass** der Haltebereich (3) einen innen liegenden Vorsprung (3A) aufweist, der im Wesentlichen diametral gegenüber des mit der Verankerung (2) verbundenen Haltebereiches liegt.

16. Vorrichtung nach Anspruch 15, **dadurch gekennzeichnet, dass**
in der ersten Position die Achse (AF) der Durchgangsöffnung im Wesentlichen parallel zu der Achse (AS) der Verankerung (2) ist;
in der zweiten Position die Achse (AF) der Durchgangsöffnung mit Bezug auf die Achse (AS) der Verankerung (2) geneigt ist.

17. Vorrichtung nach Anspruch 1, **dadurch gekennzeichnet, dass** der Haltebereich (3) einen oberen geweiteten Rand aufweist.

18. Vorrichtung nach einem der Ansprüche 1 bis 17, wobei der Haltebereich (3) ein relativ dünne Dicke aufweist, sowie einen ersten Randbereich (3B), dessen Querschnittsprofil gebogene Enden umfasst, wobei der Haltebereich (3) auch entlang des ersten Randbereiches (3B) eine relativ dünne Dicke aufweist.

19. Vorrichtung nach Anspruch 18, **dadurch gekennzeichnet, dass** der Haltebereich (3) auch einen zweiten Randbereich (3C) aufweist, dessen Querschnittsprofil ein gebogenes Ende umfasst, wobei der Haltebereich (3) auch entlang des zweiten Randbereich (3C) eine relativ dünne Dicke aufweist.

20. Vorrichtung nach Anspruch 18, **dadurch gekennzeichnet, dass** der Haltebereich (3) eine im Wesentlichen gleich bleibende Dicke aufweist.

21. Vorrichtung nach Anspruch 18, **dadurch gekennzeichnet, dass** der Haltebereich (3) im Allgemeinen ringförmig ausgebildet ist.

22. Vorrichtung nach Anspruch 18, **dadurch gekennzeichnet, dass** die Vorrichtung ein gebogenes Blattelement umfasst, das ein Paar gebogener Elemente aufweist, die in klemmbackenförmiger Weise einander gegenüber liegend angeordnet sind.

23. Vorrichtung nach Anspruch 18, **dadurch gekennzeichnet, dass** dieVorrichtung ein unteres Halteelement (4) umfasst, das zum Halten des Bodenbereiches des Zurüstteils (8) ausgebildet ist.

24. Vorrichtung nach Anspruch 18, **dadurch gekennzeichnet, dass** die Verankerung (2) und die Haltemittel (3, 4) einen aus einem Stück geformten Körper bilden.

25. Vorrichtung nach Anspruch 24, **dadurch gekennzeichnet, dass** der aus einem Stück geformte Körper aus Karbonfaser gebildet ist.

26. Vorrichtung nach Anspruch 21, **dadurch gekennzeichnet, dass** der Verbindungsbereich zwischen der Halterung (3) und der Verankerung (2) elastisch verformbar ist, so dass die Halterung (3) mit Bezug auf die Verankerungsachse (AS) zwischen wenigstens zwei unterschiedlichen Positionen elastisch um ihre Achse (AF) schwenkbar ist, wenn die Flasche in einer der Positionen in die Aufnahme eingesetzt wird, und die Halterung (3) das Zurüstteil (8) in elastischer Weise in der Aufnahme festhält.

## Revendications

1. Dispositif de support pour accessoire de bicyclette, en particulier un dispositif de support de bouteille, définissant un siège pour loger un accessoire (8), en particulier une bouteille, le dispositif (1) comprenant
- une partie d'ancrage (2), qui doit être fixée au cadre (6) d'une bicyclette, et
- une partie de maintien (3), sensiblement de forme annulaire, reliée à ladite partie d'ancrage et définissant une ouverture axiale traversante, destinée à recevoir le corps de l'accessoire (8) à travers celle-ci, ladite partie de maintien annulaire (3) étant reliée à ladite partie d'ancrage (2) au niveau d'une partie de liaison (10),
**caractérisé en ce que** ladite partie de maintien de forme sensiblement annulaire (3) peut pivoter de manière élastique autour de la partie de liaison (10) à partir d'une première position vers une seconde position suite à l'introduction de l'accessoire (8) dans ledit siège, de telle manière que dans ladite seconde position ladite partie de maintien de forme sensiblement annulaire maintienne de manière élastique l'accessoire dans ledit siège.

2. Dispositif selon la revendication 1, **caractérisé en ce que** ladite partie de maintien annulaire est sous la forme d'une bande (3).

3. Dispositif selon la revendication 2, **caractérisé en ce que** ladite bande (3) a une partie supérieure et se prolonge d'une manière en porte-à-faux à partir de ladite partie supérieure le long d'un plan généralement incliné vers le bas, afin de définir une partie de bande diamétralement opposée à ladite partie supérieure et déplacée vers le bas par rapport à celle-ci.

4. Dispositif selon la revendication 3, **caractérisé en ce que** ladite bande (3) est reliée à ladite partie d'ancrage (2) au niveau de ladite partie supérieure.

5. Dispositif selon la revendication 1, **caractérisé en ce que** ladite partie d'ancrage (2) et ladite partie de maintien (3) forment un corps en une seule pièce.

6. Dispositif selon la revendication 5, **caractérisé en ce que** ledit corps en une seule pièce comprend une partie déformable de manière élastique qui est proche de l'endroit de la partie de liaison entre la partie d'ancrage (2) et ladite partie de maintien (3).

7. Dispositif selon la revendication 1, **caractérisé en ce qu'**il comprend une partie de support inférieure (4), qui est également reliée à la partie d'ancrage et destinée à supporter une partie inférieure du corps de l'accessoire (8).

8. Dispositif selon la revendication 7, **caractérisé en ce que** ladite partie d'ancrage (2), ladite partie de maintien (3) et ladite partie de support (4) forment un corps en une seule pièce.

9. Dispositif selon la revendication 1, **caractérisé en ce qu'**à ladite partie de maintien (3) est associée une languette déformable de manière élastique (5) qui est destinée à coopérer avec ledit accessoire (8) lorsque ladite partie de maintien (3) est dans ladite seconde position.

10. Dispositif selon la revendication 9, **caractérisé en ce que** ladite partie d'ancrage (2), ladite partie de maintien (3), ladite partie de support (4) et ladite languette (5) forment un corps en une seule pièce.

11. Dispositif selon la revendication 1, **caractérisé en ce qu'**il est équipé de moyens de guidage et de placement (2A, 2B), comprenant au moins deux saillies (2A) se prolongeant longitudinalement le long d'une partie principale de ladite partie d'ancrage (2), de façon à définir une cavité (2B).

12. Dispositif selon la revendication 11, **caractérisé en ce que** ladite partie d'ancrage (2), ladite partie de maintien (3), ladite partie de support (4), ladite languette (5) et lesdites saillies (2A, 2B) forment un corps en une seule pièce.

13. Dispositif selon la revendication 5 ou 8 ou 10 ou 12, **caractérisé en ce que** ledit corps en une seule pièce est fabriqué à partir d'un matériau de fibre de carbone.

14. Dispositif selon la revendication 1, **caractérisé en ce que** :
- dans ladite première position, l'axe (AF) de ladite ouverture traversante est incliné par rapport à l'axe (AS) de la partie d'ancrage (2) ;
- dans ladite seconde position, l'axe (AF) de ladite ouverture traversante est sensiblement parallèle à l'axe (AS) de la partie d'ancrage (2).

15. Dispositif selon la revendication 1, **caractérisé en ce que** ladite partie de maintien (3) a une saillie interne (3A) sensiblement diamétralement opposée à la partie de celle-ci reliée à ladite partie d'ancrage (2).

16. Dispositif selon la revendication 15, **caractérisé en ce que**
- dans ladite première position, l'axe (AF) de ladite ouverture traversante est sensiblement parallèle à l'axe (AS) de la partie d'ancrage (2) ;
- dans ladite seconde position, l'axe (AF) de ladite ouverture traversante est incliné par rapport à l'axe (AS) de la partie d'ancrage (2).

17. Dispositif selon la revendication 1, **caractérisé en ce que** ladite partie de maintien (3) possède un bord évasé supérieur.

18. Dispositif selon l'une quelconque des revendications 1 à 17, dans lequel ladite partie de maintien (3) présente une épaisseur relativement mince et un premier bord (3B) formé de façon à avoir une coupe transversale avec un profil ayant une extrémité incurvée, ladite partie de maintien (3) ayant une épaisseur relativement mince également le long dudit premier bord (3B).

19. Dispositif selon la revendication 18, **caractérisé en ce que** ladite partie de maintien (3) comprend également un second bord (3C) et est formée le long de ce dernier de façon à avoir une coupe transversale avec un profil ayant une extrémité incurvée, ladite partie de maintien (3) ayant une épaisseur relativement mince également le long dudit second bord (3C).

20. Dispositif selon la revendication 18, **caractérisé en ce que** ladite partie de maintien (3) a une épaisseur sensiblement constante.

21. Dispositif selon la revendication 18, **caractérisé en ce que** ladite partie de maintien (3) a une forme généralement annulaire.

22. Dispositif selon la revendication 18, **caractérisé en ce qu'**il comprend un élément de lame incurvée présentant une paire d'éléments incurvés opposés l'un par rapport à l'autre d'une manière en forme de mâchoire.

23. Dispositif selon la revendication 18, **caractérisé en ce qu'**il comprend un élément de support inférieur (4) qui est destiné à supporter la partie inférieure de l'accessoire (8).

24. Dispositif selon la revendication 18, **caractérisé en ce que** ladite partie d'ancrage (2) et lesdits moyens de maintien (3, 4) sont réalisés en un corps d'une seule pièce.

25. Dispositif selon la revendication 24, **caractérisé en ce** ledit corps en une seule pièce est fait en fibre de carbone.

26. Dispositif selon la revendication 21, **caractérisé en ce que** la partie de liaison entre ladite partie de maintien (3) et ladite partie d'ancrage (2) est déformable de manière élastique, de sorte que la partie de maintien (3) puisse pivoter de manière élastique avec son axe (AF) par rapport à l'axe (AS) de la partie d'ancrage, entre au moins deux positions différentes suite à l'introduction de la bouteille dans ledit logement, dans une desdites positions, ladite partie de maintien (3) étant sollicitée de manière élastique de telle sorte qu'elle maintienne l'accessoire (8) bloqué dans son logement.
